# EUROPEAN PATENT APPLICATION

(11) **EP 4 177 810 A1**
(43) Date of publication of application: **10.05.2023**
(21) Application number: 23150154.5
(22) Date of filing: 14.04.2017
(51) Int. Cl.: G06Q 20/40, G06Q 20/38, G06F 21/31, G06F 21/32, H04L 9/08, H04L 9/32

(54) **METHOD AND DEVICE FOR AUTHORIZING MOBILE TRANSACTIONS**

(30) Priority: 18.04.2016 FR 1653394
(62) Divisional of application: 17718882.8
(71) Applicant: Bancontact Payconiq Company, 1040 Bruxelles (BE)
(72) Inventor: HUQUE, Thierry, 1367 GRAND-ROSIERE (BE); THYS, Gerd, 2018 ANTWERPEN (BE); WOUTERS, Karel, 3530 HOUTHALEN (BE)
(74) Representative: Cabinet Beaumont

(57) **Abstract**

The invention concerns a method of transaction authorization comprising: deriving, by a first server, a first key based on a mobile PIN value associated with a mobile device; encrypting, by the first server based on the derived key, a verification value to generate an encrypted verification value (eSEAL_{ATC}); transmitting, by the first server, the encrypted verification value to the mobile device; receiving, by the first server or by a second server, a further verification value (SEAL_{ATC}') generated by the decryption of encrypted verification value using a second key (KEY_{PIN}') derived based on a candidate PIN value entered into the mobile device or based on a PIN stored by the mobile device and released after a user authentication operation; and authorizing the transaction based on a verification of the further verification value.

## Description

### FIELD

The present disclosure relates to the field of transactions performed using mobile devices, and in particular to a mobile contactless payment solution.

### BACKGROUND

Using mobile communication devices, such as mobile telephones, to perform electronic payment transactions is becoming increasingly popular, and has the potential to one day entirely replace most card payments.

As one form of payment mechanism, mobile telephones and other types of mobile devices are increasingly being equipped with NFC (Near-Field-Communication) interfaces, which enable them to perform electromagnetic transponder functions in addition to their other functions. In particular, such devices are able to emulate the functions of an electromagnetic transponder, which could be of the contactless card type. Such functionality for example enhances the mobile device, by allowing it to be used for various applications, for example as an electronic wallet allowing payments to be made for accessing services such as transport networks.

Historically, chip cards exclusively interacted with Point-of-Sale (POS) equipment over a contact interface, requiring a card to be inserted in a slot. In around 2005, the first cards having an additional contactless communications interface were launched. In particular, the contactless EMV (Europay, MasterCard, Visa) solution is based on the ISO-14443 specifications (the names "Europay", "MasterCard" and "Visa" may correspond to registered trademarks). The same ISO-14443 specifications were integrated in the NFC (Forum) specifications to allow for NFC enabled devices to be interoperable with existing contactless card infrastructure. Alignment of NFC and EMV specifications paved the path for EMV Mobile Contactless Payments.

A Mobile Contactless Card Application is an application running on a mobile device which can run in different environments, depending on the Mobile Contactless Payment Solution. The two major categories are:
- Secure Element (SE) based solutions in which the Mobile Contactless Card Application is running in a secure element, either embedded in the mobile device or on a UICC (Universal Integrated Circuit Card);
- Host Card Emulation (HCE) solutions in which the Mobile Contactless Card Application is part of a payment application running in the mobile OS (operating system).

In SE based solutions, the Mobile Contactless Card Application is provisioned to and running in a hardware secure element (chip) with the security characteristics comparable to a payment chip card.

Compared to SE based solutions, HCE solutions are more openly exposed to threats. The Mobile Contactless Card Application runs as part of a mobile application in the 'rich' mobile OS (operating system), and like any mobile application, it is vulnerable to security breaches. Even though there are a growing number of measures to harden the mobile application against security breaches, there is a need for a simple solution providing additional security for HCE based solutions.

### SUMMARY

It is an aim of embodiments of the present description to at least partially address one or more needs in the prior art.

According to one aspect, there is provided a method of transaction authorization comprising: deriving, by a first server, a first key based on a mobile PIN value associated with a mobile device; encrypting, by the first server based on the derived key, a verification value to generate an encrypted verification value; transmitting, by the first server, the encrypted verification value to the mobile device; receiving, by the first server or by a second server, a further verification value generated by the decryption of encrypted verification value using a second key derived based on a candidate PIN value entered into the mobile device or based on a PIN stored by the mobile device and released after a user authentication operation; and authorizing the transaction based on a verification of the further verification value.

According to one embodiment, the transaction is a payment.

According to one embodiment, the user authentication operation is a fingerprint verification.

According to one embodiment, the verification value is generated based on one or more credentials.

According to one embodiment, generating the verification value comprises: generating an authentication code using a third key and based on at least one of an ATC (Application Transaction Counter) value and a token representing a sensitive identifier.

According to one embodiment, the transaction is a card payment and the sensitive identifier is a PAN (primary account number) associated with the card.

According to one embodiment, the first key and the second key are derived using a same key derivation function, the same key derivation function being further based on a nonce value received by the mobile device from the first server.

According to one embodiment, the encrypted verification value is transmitted to the mobile device as part of a set of single use credentials further comprising: an ATC (Application Transaction Counter); and a nonce value (Nonce_{PIN}) for use in deriving the second key (KEY_{PIN}').

According to a further aspect, there is provided a transaction authorization system comprising: a first server adapted to: derive a first key based on a mobile PIN associated with a mobile device; encrypt, based on the first key, a verification value to generate an encrypted verification value; and transmit the encrypted verification value to the mobile device, wherein the first server or a second server is further adapted to: receive a further verification value generated by the decryption of the encrypted verification value using a second key derived based on a candidate PIN value entered into the mobile device or based on a PIN stored by the mobile device and released after a user authentication operation.

According to one embodiment, the transaction is a payment.

According to one embodiment, the first server and/or the second server and/or one or more further servers are adapted to authorize the transaction based on a verification of the further verification value.

According to a further aspect, there is provided a method of transaction authorization comprising: receiving by a mobile device an encrypted verification value; deriving, by the mobile device, a key based on a candidate PIN value entered into the mobile device or based on a PIN stored by the mobile device and released after a user authentication operation; decrypting the encrypted verification value by the mobile device based on the key to generate a further verification value; and transmitting the further verification value to a server for verification.

According to yet a further aspect, there is provided a mobile device comprising one or more circuits adapted to: receive an encrypted verification value; derive a key based on a candidate PIN value entered into the mobile device or based on a PIN stored by the mobile device and released after a user authentication operation; decrypt the encrypted verification value based on the derived key to generate a further verification value; and transmit the further verification value to a server to initiate an electronic transaction.

According to one embodiment, the electronic transaction is a card payment.

### BRIEF DESCRIPTION OF THE DRAWINGS

The foregoing and other features and advantages will become apparent from the following detailed description of embodiments, given by way of illustration and not limitation with reference to the accompanying drawings, in which:
Figure 1 schematically illustrates a payment system according to an example embodiment of the present disclosure;
Figure 2 schematically illustrates a mobile device of Figure 1 in more detail according to an example embodiment of the present disclosure;
Figure 3 schematically illustrates part of the payment system of Figure 1 in more detail according to an example embodiment of the present disclosure;
Figure 4 is a flow diagram illustrating operations in a method of generating a single use key according to an example embodiment;
Figure 5 is a flow diagram illustrating operations in a method of generating an encrypted verification value according to an example embodiment;
Figure 6 is a flow diagram illustrating operations in a method of generating a further verification value according to an example embodiment;
Figure 7 is a flow diagram illustrating operations in a method of verifying a further verification value according to an example embodiment; and
Figure 8 is a flow diagram illustrating operations in a method of generating a further verification value according to an alternative embodiment to that of Figure 6.

### DETAILED DESCRIPTION

In the following description, example embodiments are described relating to an electronic payment based on a physical payment card having a PAN (primary account number). However, it will be apparent to those skilled in the art that the principles described herein could be applied to other forms of electronic transactions not directly relating to a card payment. For example, the electronic transaction could be any of a range of electronic services provided between a mobile device and a transaction terminal, such as a non-card payment, the establishment of a direct payment facility such as an E-mandate, document or contract signature, data verification, such as an address or age check, and/or authentication check of the mobile device or of a user of the mobile device. An E-mandate is for example an agreement authorizing a merchant to receive one or more direct debit payments from a customer.

The following table provides a list of definitions of terms and abbreviations used in the present disclosure.

| Term or Abbreviation | Definition |
|---|---|
| Card Authentication | A method to verify that a card is in fact genuine. |
| Mobile PIN | PIN, entered on the mobile device, to authenticate a cardholder. |
| Near Field Communication (NFC) | A set of communication protocols that enable two electronic devices, one of which is usually a portable device such as a smartphone or chip card, to establish communication by bringing them within around 4 cm of each other. |
| Secure Element (SE) | Tamper-resistant platform (typically a one chip secure microcontroller) capable of securely hosting applications and their confidential and cryptographic data (e.g. symmetric keys management) . |
| Transaction authorization | The process in which the Issuer, or a processor on the Issuer's behalf, approves or denies a card transaction. |
| Token (or Payment Token or Issuer Token) | Surrogate value that replaces the original (or Funding) PAN that uniquely identifies a physical card. |
| User/cardholder authentication, aka cardholder verification | The process by which cardholder ownership of the payment card account is validated by the card Issuer. |
| User/cardholder identification | The process of identifying a cardholder, within the context of a payment transaction, generally followed by user authentication. |

The present disclosure describes a Mobile Contactless Payment Solution involving a Proximity Payment Systems Environment (PPSE) application and a mobile device payment application, installed on a mobile device.

When implementing a Mobile Contactless Payment solution using Host Card Emulation, the PPSE application and payment application together emulate a Contactless Card.

Contactless payments described herein for example conform to the EMV (Europay, MasterCard, Visa) standard. The EMV standard is for example defined in the following publications, which are hereby incorporated by reference to the extent permitted by the law:
- EMV Integrated Circuit Card Specifications for Payment Systems, Book 1, Application Independent ICC to Terminal Interface Requirements, Version 4.3, November 2011;
- EMV Integrated Circuit Card Specifications for Payment Systems, Book 2, Security and Key Management, Version 4.3, November 2011;
- EMV Integrated Circuit Card Specifications for Payment Systems, Book 3, Application Specification, Version 4.3, November 2011;
- EMV Integrated Circuit Card Specifications for Payment Systems, Book 3, Cardholder, Attendant, and Acquirer Interface Requirements, Version 4.3, November 2011; and
- EMV - Book C-2 - Kernel 2 Specification, Version 2.5 March 2015.

The following publication describes PIN (personal identification number) management and security, and is also incorporated by reference to the extent permitted by the law:
- ISO 9564-2:2014 - Personal Identification Number (PIN) management and security -- Part 2: Approved algorithms for PIN encipherment.

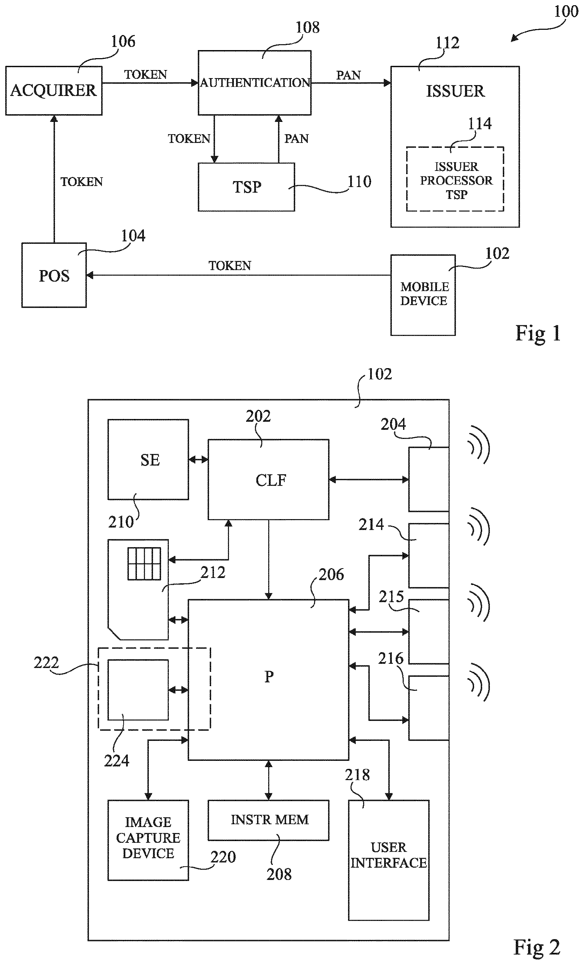

Figure 1 schematically illustrates a contactless payment system 100 according to an example embodiment of the present disclosure.

The system 100 for example comprises a mobile device (MOBILE DEVICE) 102 capable of wireless communications, and of performing an electronic payment. For example, the mobile device 102 is a mobile telephone, smart phone, tablet computer, digital media player or the like.

The mobile device 102 is shown in communication with a transaction terminal 104, which is for example a point-of-sale (POS). In some embodiments, the communication between the mobile device 102 and the transaction terminal 104 is at least partially via a wireless interface, such as an NFC interface, a wireless data connection via a telecommunications network, a Bluetooth interface or a wireless local area network (WLAN).

Alternatively, the transaction terminal 104 may communicate with the mobile device 102 using a camera of the mobile device 102. For example, the transaction terminal 104 may comprise a display for displaying a barcode such as a QR-code (quick response code), which may be captured by the camera and interpreted using a suitable application loaded on the mobile device 102.

In alternative embodiments, the transaction terminal 104 could be incorporated within the mobile device 102. For example, the mobile device 102 may store and run a merchant application implementing the transaction terminal 104. In such a case, the transaction terminal 104 for example communicates with other circuitry of the mobile device by generating an intent, such as a URL-intent (universal resource locator-intent). As will be known by those skilled in the art, an intent is a digital message passed from an application being run on a mobile device to the operating system of the mobile device, that causes a certain application to be called, and passes information, such as a parameter, to that application. For example, one type of intent may cause a web browser of the mobile device to access a specific location. For example, the intent-URI (universal resource identifier) *https:*//*web_address* activates the browser application of a mobile device and directs the browser to the location identified by the web address.

The transaction terminal 104 is for example positioned at an entry barrier of a restricted area, such as a transport network, or at a point of sale in a shop or restaurant. In such cases, the mobile device 102 is for example in relatively close proximity to the transaction terminal 104, and the communication between the mobile device and the transaction terminal is for example by NFC, the mobile device emulating a wireless transponder. Alternatively, other forms of wireless communication between the mobile device 102 and the transaction terminal 104 would be possible, such as a wireless connection via Bluetooth or via a wireless local area network (WLAN).

In other embodiments, the mobile device 102 could be remote from the transaction terminal 104, and the communication between the mobile device and the transaction terminal could be via one or more intervening networks, such as a data network of a telecommunications network and/or the internet. In such a case, the transaction terminal 104 could correspond to a remote server of a merchant.

The system 100 further comprises, in addition to the mobile device 102 and the transaction terminal 104, an acquirer (ACQUIRER) 106, an authentication system (AUTHENTICATION) 108 in communication with a token service provider (TSP) 110 and an issuer system (ISSUER) 112.

The acquirer 106 is for example a server providing an interface between the transaction terminal 104 and the authentication system 108 and/or issuer system 112. For example, the acquirer may correspond to an entity that facilitates transactions made using a mobile device.

The authentication system 108 for example provides a level of security between the issuer system 112 and the mobile device 102, by implementing a tokenization scheme with online PIN verification, as will be described in more detail below.

The issuer system 112 for example corresponds to the system associated with the payment card issuer, and this entity for example has the capacity to execute a payment to a merchant from the account of the mobile user.

In operation, the mobile device 102 is for example issued with a token (TOKEN) by the TSP 110, or alternatively by a TSP (ISSUER PROCESSOR TSP) 114 forming part of the issuer system. The link between the token and the original (funding) Card PAN is for example securely stored by the TSP 110.

"Tokenization", when applied to data security, is the process of substituting a sensitive data element with a non-sensitive equivalent, referred to as a token, that has no extrinsic or exploitable meaning or value. The token is a reference (i.e. identifier) that maps back to the sensitive data through a tokenization system. In the present disclosure, and in the context of a card payment, the term "token" is used to designate a value that replaces the original (or Funding) PAN that uniquely identifies a physical payment card. As such, the definition of Token matches the EMVCo definition of a payment token. In alternative embodiments, the token could replace any type of account number or identifier that is to be kept secret.

The token for example has the same format as a PAN and will serve the same purpose during EMV cryptography. Under normal circumstances, the token is for example static in a sense that it does not change for a Card Application instance. However, in some embodiments, a Token may be changed in case of a lost or stolen card.

The token is for example used to uniquely identify a digitized card, which can be one of several digitized cards linked to a single physical card. Thus there may be a one-to-many relationship between PANs and tokens, since a card can be digitized in multiple mobile solutions, such as in various applications and wallets, on one or more of the cardholder's mobile devices. A payment card, identified by its PAN, can therefore exist in a digitized form in one or more of these mobile contactless solutions on the same device and even on multiple devices of a user/cardholder (since the cardholder can decide to digitize the same card in two smart phones, or even wearables) .

To allow for this multiplication of digitized cards all linked to the same account, there are two main approaches:
- assigning a Virtual Card PAN to each Digitized Card. In this way, on the issuer's card management system, each digitized card is a virtual card; or
- assigning a token to each digitized card.

In mobile contactless payments, the mobile device for example provides the hardware to perform a contactless payment transaction at protocol level. The card payment application logic is for example handled by the digitized card. This digitized card may reside in different components embedded in or accessible by the mobile device. For example the digitized card is:
- integrated in a mobile application running in the 'rich' mobile OS. This option, referred to as 'Host Card Emulation (HCE)' is for example a viable solution for Android and Microsoft Windows Mobile OS (the names "Android" and "Microsoft Windows" may correspond to registered trademarks);
- installed and running in an embedded hardware secure element (SE). This embedded SE is under control of the device manufacturer who determines the technology on how a card application is provisioned and how it is accessible from the Mobile OS. This is often via a 'Wallet' application. Such a solution for example concerns Apple and Samsung wallets (the names "Apple" and "Samsung" may correspond to registered trademarks);
- installed and running in the UICC card next to the SIM application. This for example involves a specific (SWP) hardware link being available between the NFC Controller hardware on the mobile device and the UICC. The UICC is under control of the Mobile Network Operator (MNO) and the card provisioning technology is standardized by international organisations (e.g. GlobalPlatform) . This option is a viable solution for Android and Microsoft Windows Mobile OS.

With reference again to Figure 1, when a payment transaction is to be initiated, the mobile device 102 for example enters into communication with the transaction terminal 104, and transmits the token to it. The transaction terminal 104 in turn passes the token to the authentication system 108 via the acquirer 106. The authentication system 108 uses the TSP 110 to retrieve the PAN associated with the token. The PAN can then be passed to the issuer system 112 such that the payment can be processed.

In addition to the token, the mobile device 102 also for example stores a limited set of single use credentials, each valid for one transaction, as will be described in more detail below.

Figure 2 schematically illustrates the mobile device 102 in more detail according to an example embodiment.

As illustrated, the device 102 for example comprises a contactless front-end integrated circuit (CLF) 202, which will be referred to herein as an NFC router. The NFC router 202 is coupled to an NFC antenna 204, and together the router 202 and antenna 204 provide NFC circuitry for emulating the behaviour of an NFC transponder.

The NFC router 202 is also for example coupled to a host processing device (P) 206 of the mobile device 102. The processing device 206 for example comprises one or more processors under the control of instructions stored in an instruction memory (INSTR MEM) 208. The NFC router 202 is also for example coupled to a secure element (SE) 210, which is for example an embedded SE (eSE), and/or to a SIM or universal SIM circuit 212. The circuit 212 is for example additionally coupled to the processing device 206. Additionally or alternatively, the processing device 206 may perform host card emulation (HCE), meaning that NFC communications are routed to the host processing device 206, which emulates the behaviour of an NFC secure element. This permits secure NFC transactions to be performed directly by the processing device 206 without requiring the presence of a secure element within the mobile device 102.

The processing device 206 is also for example coupled to: an antenna 214 permitting telecommunications within a cellular network; to an antenna 215 permitting wi-fi (wireless fidelity) communications; and/or to an antenna 216 permitting ultra wideband (UWB) RF communications. In some embodiments, the mobile device 102 may comprise only one or some of the antennas 214, 215 and 216. The mobile device 102 further comprises a user interface 218, for example comprising a display, keypad and/or touch screen, coupled to the processing device 206.

The mobile device 102 also for example comprises an image capture device 220, comprising an image sensor for capturing digital images. For example, the image capture device 220 is capable of capturing machine-readable codes such as QR-codes, and the mobile device 102 stores a suitable software application for interpreting the machine readable code. Furthermore, in some embodiments, the image capture device 220 or a separate image sensor is capable of capturing biometric samples such as a finger print, finger vein or retina scan.

In some embodiments, the mobile device 102 comprises a trusted execution environment (TEE) 222 that for example comprises a memory device 224 storing one or more software applications and an allocation of the processing resources of the processing device 206 for execution of the software applications in isolation from the execution of other software applications stored in the instruction memory. For example, the trusted executed environment 222 is used for the execution of sensitive software applications, such as an application for PIN (personal identification number) entry and/or for capturing a biometric sample.

The embedded secure element (eSE) and/or trusted execution environment are typically used to store the card payment application(s). This includes the credentials related to card(s), such as EMV card master keys.

The memory 208 of the mobile device 102 for example stores a Proximity Payment Systems Environment (PPSE) application and a payment application, or Mobile Contactless Card Application which will be referred to hereafter simply as "card application". These applications are for example executed when a payment transaction is to be initiated. In particular, when implementing a mobile contactless payment solution using host card emulation, these two applications emulate the contactless payment card.

The mobile device 102 provides additional means to perform cardholder authentication. These are referred to as Consumer Device Cardholder Verification Methods (CDCVM). CDCVM covers multiple methods, such as:
- entering a PIN on the mobile device with verification by the mobile application;
- entering a PIN on the mobile device with verification by the (issuer) host;
- biometric verification (at mobile OS, or device level);
- other device unlocking capabilities (PIN, pattern,...)

In the present disclosure, two CDCVM algorithms are defined for HCE based solutions. One is based on entering a PIN on the mobile device 102 with verification by the issuer system 112. This algorithm assumes that the card application has been launched and the PIN has been entered prior to the start of the EMV transaction, in other words prior to the `tap'. The other CDCVM is fingerprint verification, resulting in the same logical flow. These processes will be described in more detail below.

When a payment is to be initiated, the following operations are for example performed between the mobile device 102 and the transaction terminal 104.
a) the card application is launched on the mobile device 102, and for example includes a form of cardholder verification that falls under the general term of a CDCVM;
b) the terminal 104 selects the Proximity Payment Systems Environment (PPSE) using the SELECT command via NFC;
c) the mobile device 102 is tapped towards the terminal 104;
d) the card application stored on the mobile device 102 for example responds with a list of the supported AIDs (application identifiers), for example included in the File Control Information (FCI);
e) the terminal 104 selects the AID of the card application, which is for example an application supported by both the card and the terminal, and issues the SELECT command with this AID;
f) The card application for example responds with the File Control Information (FCI). The Processing Options Data Object List (PDOL) is for example not present;
g) the terminal 104 for example issues the GET PROCESSING OPTIONS command. Since there is no PDOL, the terminal for example uses the command data field '8300';
h) the card application for example returns the Application Interchange Profile (AIP) and the Application File Locator (AFL);
i) the terminal 104 for example issues multiple READ RECORD commands to retrieve the generic card application data, the Issuer Public Key and the ICC Public Key;
j) the terminal 104 performs risk management, such as checking the card expiry date, the terminal floor limit, etc., and the terminal 104 for example makes a first decision to decline the transaction or to complete it online. This decision is for example based upon the Terminal Verification Results (TVR), the issuer action preferences and acquirer action preferences. The terminal 104 issues the GENERATE AC command requesting an ARQC;
k) based on the CDOL1 related data included in the data field of the GENERATE AC command, the card application for example performs its own card risk management. The card application then responds with an ARQC;
l) the terminal 104 goes online, sending the authorization message to the issuer. This message for example includes the ARQC for online card authentication.

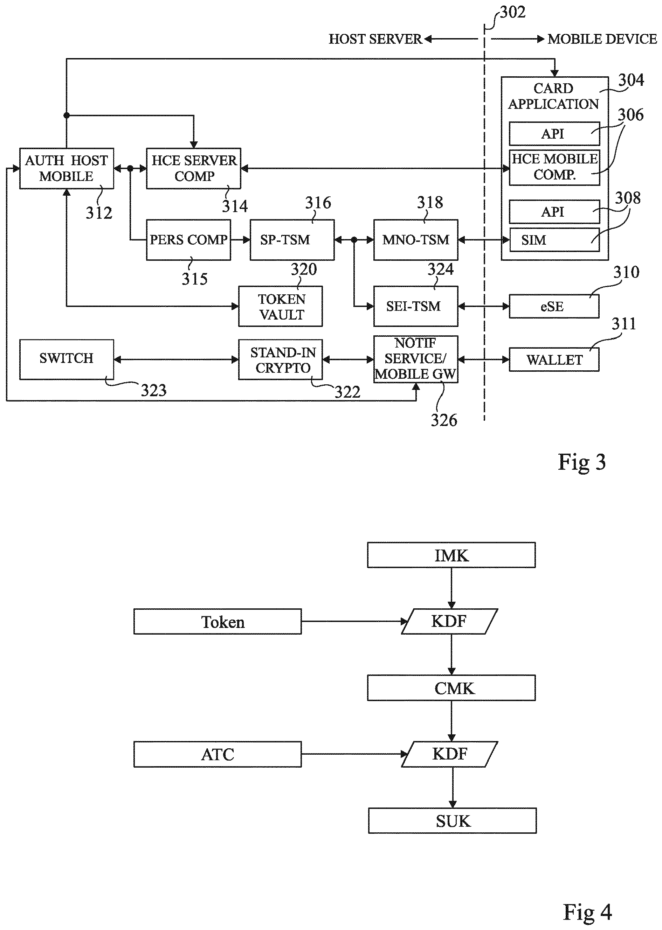

Figure 3 schematically represents hardware and software components of the contactless payment system 100 of Figure 1 according to an example embodiment. A dashed line 302 shows the division between those elements forming part of the host infrastructure, and in particular the acquirer 106, the authentication system 108, the TSP 110 and the issuer system 112 of Figure 1, and those elements forming part of the mobile device 102. The host infrastructure will be referred to hereafter as the host server, even if this may comprise more than one server.

The mobile device 102 for example comprises the card application (CARD APPLICATION) 304, which for example includes a component 306 corresponding to a mobile component of the HCE implementation and including an application programming interface (API) provided to the card application within which it is embedded. The card application 304 also for example includes a component 308 reserved for example for mobile network operators and also including a corresponding API. Furthermore, the mobile device 102 comprises an embedded secure element (eSE) 310 and a wallet application (WALLET) 311 running on the mobile device.

The host server for example includes an authentication host mobile (AUTH HOST MOBILE) 312, which for example provides authentication of the cardholder, and an HCE server component (HCE SERVER COMP) 314 that interacts with the HCE mobile component 306. The host server also for example comprises a personalization component (PERSO COMP) 315, a trusted service manager (SP-TSM) 316 associated with the service provider, and a trusted service manager (MNO-TSM) 318 associated with the mobile network operator.

The host infrastructure also for example includes the token service provider (TSP) comprising a token vault (TOKEN VAULT) 320 in communication with the authentication host mobile 312, and a stand-in cryptographic component (STAND-IN CRYTPO) 322 in communication with a communications switch (SWITCH) 323. Further elements include a secure element trusted service manager (SEI-TSM) 324, which for example communicates with the secure element 310 of the mobile device 102, and a notification service/mobile gateway (NOTIF SERVICE/MOBILE GW) 326, which for example communicates with the wallet application 311 and with the authentication host mobile 312. The trusted service manager 324 is for example adapted to provision, personalize and manage the lifecycle of the digitized cards on the eSE 310. The notification service/mobile gateway 326 is for example adapted to handle the wallet application lifecycle, and requests to enroll cards and to manage transaction history updates.

The token service provider (TSP) component for example intervenes during card provisioning and payment authorization and clearing for Mobile Contactless payments. The TSP manages tokens, tokenizes PANs and detokenizes tokens. The token vault 320 is a memory that for example securely stores the token-PAN links.

For example, the TSP described herein complies with the specifications listed in Chapter 5 of the EMVCo Payment Tokenization Specification Technical Framework, version 1.0, March 2014, the contents of which is hereby incorporated by reference to the extent permitted by the law.

A token request will typically contain information on the PAN, expiry date and the Token Requestor ID (card application, Bank application or OEM Wallet). The Token Requestor ID allows the TSP to assign per Issuer different Token BIN ranges for the different mobile solutions (Token Requestor ID). The time to handle a tokenization request by the TSP for example allows for near real-time card provisioning.

The TSP for example has a secure, real-time connection with the issuer system 112. The issuer system 112 and TSP are for example mutually authenticated. The PAN and token data is for example exchanged in an encrypted form.

During authorization of the payment transaction, the TSP for example interfaces with the switches 323 and will for example:
- validate the EMV cryptogram generated by the digitized card during the payment transaction at the transaction terminal 104;
- look up the funding PAN related the token; and
- provide the EMV cryptogram validation result, token and funding PAN to the switch 323, which will forward it to the issuer system 112.

For the EMV cryptogram validation, the TSP for example relies on a HSM (hardware security module) containing the EMV issuer master keys (IMK) that is kept synchronous, through a key ceremony, with the IMK as present in the issuer system 112. With respect to the integration with the switches 323, the processing overhead related to the detokenization and EMV cryptogram validation at the TSP is for example limited to a maximum of 100 ms. To achieve this and the strict security requirements, the connection between the Switch(es) 323, and potentially the Issuer System 112 and the TSP, is for example a permanent link.

With reference again to Figure 3, in operation, implementation of the HCE solution for example involves, between the authentication host mobile 312 and the HCE server component 314, requests for:
- registration, activation and deactivation of HCE mobile component;
- provisioning of a digitized card;
- changes in card state (enable/disable/delete);
- update card data; and
- replenishment with new Single Use credentials.

Furthermore, between the HCE server component 314 and the authentication host mobile 312, notification messages are for example transmitted relating to changes in the HCE mobile component state, in the digitized card state and relating to replenishments.

The wallet solution for example involves notification of provisioning requests between the authentication host mobile 312 and the wallet notification service 326. Furthermore, transaction history requests are for example provided from the wallet application 311 to the TSP 320, 322.

The wallet solution and SIM based solution for example involve, between the authentication host mobile 312 and the TSM personalization component 315, requests for:
- provisioning of a digitized card;
- changes in card state (enable/disable/delete); and
- update card data.

Furthermore, for all solutions, the following communications for example occur:
- tokenization requests (PAN - token) during card provisioning between the authentication host mobile 312 and the TSP 320, 322;
- detokenization and EMV crypto validation between the switch 323 and the TSP 320, 322, including mobile PIN verification during authorization; and
- card provisioning requests between the card application and the authentication host mobile 312.

As described above, the mobile device 102 for example stores single use credentials. Single use credentials are specific for one single payment transaction and serve two purposes:
- generating an ARQC (authorization request cryptogram) for the transaction; and
- generating a cardholder verification proof. This is used to prove that the cardholder entered a correct mobile PIN or presented a correct fingerprint for the transaction.

The server component provides a mechanism to replenish the single use credentials on the mobile component.

Each single use credential for example comprises:
- an ATC (Application Transaction Counter);
- a single use key (SUK), which is the session key derived from a card master key using the ATC. This value is used to compute a standard application cryptogram for a single transaction;
- eSEAL_{ATC} - A single-use encrypted hexadecimal value, for example of 16 bytes, created and stored by the HCE server component. The value is for example different for each ATC value. The eSEAL_{ATC} values are used to generate cardholder verification proofs on the mobile phone. Such proofs are later checked by the TSP.
- Nonce_{PIN} - A single-use arbitrary 16 byte hexadecimal value created and stored by the HCE server component. The value is different for each ATC value. Nonce_{PIN} values are for example random values that are treated as key material, and thus stored in a protected space on the mobile device.

The maximum number of single use credentials in a set for a single HCE mobile component is for example configurable, and a threshold number of remaining single use credentials for example determines when the HCE mobile component should attempt to contact the HCE server component to replenish the set of single use credentials.

Figure 4 is a flow diagram illustrating an example of the derivation of the single use key (SUK) from a card master key and the issuer master key. These operations are performed by the host server, for example by the authentication system 108. The issuer master key (IMF) and the token are for example applied as inputs to a key derivation function (KDF) in order to generate the card master key (CMK). The card master key, and the ATC are then for example applied as inputs to a further key derivation function in order to generate the single use key SUK.

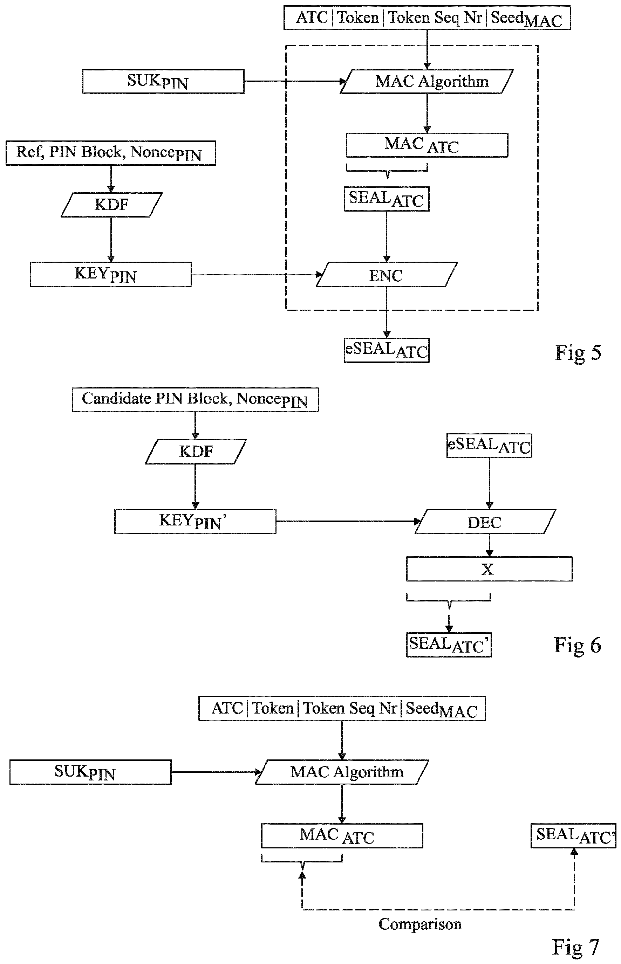

Figure 5 illustrates an example of operations in a method of generating an encrypted verification value eSEAL_{ATC}. This method is for example implemented by the host system, for example by the authentication system 108.

The method involves the use of a PIN, which is for example an online mobile PIN in the sense that the PIN is known and verified by the host system. The PIN can for example only be set and changed when the device has a mobile internet connection with the host system. For example, the PIN is at the level of the application, and not at the level of the card, which means that from an end user perspective, the PIN is the same for all cards enrolled in a given card application.

A PIN Master Key, from which a PIN Single Use Key SUK_{PIN} is derived, is for example synchronized between the HCE Server Component and the TSP.

The Seed_{MAC} value is for example a random unique for a token. It is for example generated by the TSP at the moment the token is created and passed to the HCE server component at the moment the digitized card is personalized. For a given digitized card identified by a token and token sequence number and used in a given transaction identified by a given ATC, the host server for example derives the PIN single use key SUK_{PIN} from the PIN master key in a similar fashion to the SUK derivation from the card master key.

In order to generate the encrypted verification value eSEAL_{ATC}, the inputs are for example the ATC, the token (Token), the token sequence number (Token Seq Nr), the value Seed_{MAC}, the SUK_{PIN}, the PIN (Ref. PIN Block), and the Nonce_{PIN}.

With reference to Figure 5, a MAC (message authentication code) algorithm is for example applied to the ATC, token, token Sequence number and the value Seed_{MAC}, using as the key, the value SUK_{PIN}. The output is a MAC value MAC_{ATC}. A portion of the value MAC_{ATC}, for example corresponding to the leftmost 8 bytes, are for example taken to form a verification value SEAL_{ATC}. Furthermore, a secure random nonce Nonce_{PIN} is for example generated and a key derivation function is used to derive a key KEY_{PIN} from the PIN, the Token and the Nonce_{PIN}. For example, the PIN entry is included in the form of an ISO-0 encoding of the PIN, which is for example described in the above referenced publication entitled "Personal Identification Number (PIN) management and security - Part 2: Approved algorithms for PIN encipherment".

The key Key_{PIN} is then for example used to encrypt (ENC) the verification value SEAL_{ATC} in order to generate the encrypted verification value eSEAL_{ATC}. Before encryption, the value SEAL_{ATC} is for example padded up to the encryption block size with random numbers.

The PIN specific single use credentials Nonce_{PIN} and eSEAL_{ATC} are for example transmitted to the mobile device, and in particular to the HCE solution mobile component.

Figure 6 is a flow diagram representing operations in a method of generating, by the mobile device, a further verification value SEAL_{ATC}' based on a candidate PIN entered by a user of the mobile device. For example, a mobile contactless payment transaction starts with the mobile user, presumed to be the cardholder, entering the candidate PIN. This PIN is used to derive a key key_{PIN}' in the same manner as the key Key_{PIN} described above, and using the same key derivation function, but based on the candidate PIN (Candidate PIN block) rather than the reference PIN, and based on the nonce Nonce_{PIN} received from the host system, this value for example forming part of the single use credentials. The key Key_{PIN}' is then used to decrypt (DEC) the encrypted verification value eSEAL_{ATC} in order to generate a value X. The value SEAL_{ATC}' is for example extracted from this value X, and for example corresponds to the first 8 bytes of X.

Because the output of the decryption operation has no structure, validation of SEAL_{ATC}' is for example not performed locally. For example, the value SEAL_{ATC}' is provided by the mobile device to the terminal 104 along with the ARQC, and is then forwarded by the terminal 104 to TSP for verification. Furthermore, in some embodiments, the value of the ARQC provided by the mobile device 102 to the terminal 104 is based on the value SEAL_{ATC}'. For example, in one embodiment the value SEAL_{ATC}' forms part of the Issuer Discretionary Data of Issuer Application Data (Tag 9F10). As such, it is part of the input to calculate the ARQC. The ARQC is for example a MAC that provides integrity control of the data from which it is generated, thereby allowing the integrity of the value SEAL_{ATC}' to be verified.

Verification of the value SEAL_{ATC}' by the TSP will now be described with reference to Figure 7.

Figure 7 is a flow diagram illustrating operations in a method of PIN verification.

Prior to validating the cardholder verification proof, the TSP for example performs a standard ARQC validation using the SUK, which it can derive from the token and the ATC.

For a given digitized card identified by a token and a token sequence number, the value of Seed_{MAC} is for example retrieved. For a transaction with this digitized card, identified by the ATC, the PIN single use key SUK_{PIN} can be derived. By validating the ARQC, the host system verifies the correct transmission of the verification value SEAL_{ATC}'. The value SEAL_{ATC}' is for example extracted from the Issuer Application Data (Tag 9F10) sent in the transaction.

The same MAC algorithm as applied in the method of Figure 5 is for example used to regenerate the value SEAL_{ATC}, based for example on the same inputs as the algorithm in Figure 5.

The value of SEAL_{ATC} is for example then compared to the value SEAL_{ATC}' received from the mobile device 102. If there is a match, the PIN can be considered to be successfully verified. A mismatch however indicates that the candidate PIN was incorrect.

It will be noted that the reference PIN and the nonce Nonce_{PIN} are not necessary to validate the candidate PIN.

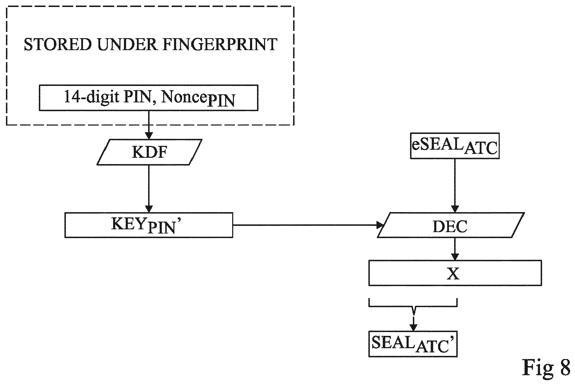

Figure 8 is a flow diagram representing operations in a method of generating the further verification value SEAL_{ATC}' as an alternative to the method represented in Figure 6. Rather than being based on a candidate PIN entered by a user of the mobile device, the method of Figure 8 is for example based on a PIN value, for example selected randomly, that is stored in a fingerprint protected part of the mobile device (STORED UNDER FINGERPRINT), and can thus only be unlocked by a fingerprint verification.

Thus instead of a user-supplied PIN, the HCE server for example decides on a random number, having a length of 14 bits in the example of Figure 8, and that is stored as the user's PIN at the server side. For example, the random PIN is stored during the enrolment of the application in fingerprint-protected storage. During SUC replenishment, the nonce value Nonce_{PIN} is stored in a secured storage, for example in the same storage as the random PIN.

A mobile contactless payment transaction starts with the cardholder performing a fingerprint scan. This unlocks the PIN and Nonce_{PIN} values. This PIN is used to derive the key key_{PIN}'. The key key_{PIN}' is then used to decrypt (DEC) the encrypted verification value eSEAL_{ATC} in order to generate a value X. The value SEAL_{ATC}' is then for example extracted from the value X in the same manner as the MAC_{ATC} described above, for example by taking its leftmost 8 bytes. The rest of the fingerprint-based cardholder verification proof generation is for identical to the PIN-based case as described in relation to Figure 7.

In alternative embodiments to that of Figure 8, fingerprint verification could be implemented in a different manner. For example, it could involve generating a key Key_{PIN} at random for each SUK at the host server side, and storing it directly in fingerprint-protected space of the mobile device 102. As a further example, it could involve storing plain SEAL_{ATC} values in fingerprint-protected space of the mobile device 102.

An advantage of the embodiments described herein is that PIN verification for a contactless transaction can be performed in a simple manner, without requiring an internet connection between the mobile device and the host server.

Having thus described at least one illustrative embodiment, various alterations, modifications and improvements will readily occur to those skilled in the art. For example, while a token-based implementation has been described, it will be apparent to those skilled in the art that the principles described herein would also be application to implementations involving the PAN directly, or a variant of the PAN, such as a protected PAN.

## Claims

1. A method of transaction authorization comprising:
deriving, by a first server (108, 110), a first key (KEY_{PIN}) based on a mobile PIN value associated with a mobile device (102);
generating, by the first server, a non-encrypted verification value (SEAL_{ATC}) by generating an authentication code (MAC_{ATC}) using a third key (SUK_{PIN}) and based on at least one of an ATC (Application Transaction Counter) value and a token representing an account number or identifier that is to be kept secret;
encrypting, by the first server based on the derived key, the non-encrypted verification value (SEAL_{ATC}) to generate an encrypted verification value (eSEAL_{ATC});
transmitting, by the first server, the encrypted verification value to the mobile device;
receiving, by a second server, a further non-encrypted verification value (SEAL_{ATC}') generated by the decryption of encrypted verification value using a second key (KEY_{PIN}') derived based on a candidate PIN value entered into the mobile device or based on a PIN stored by the mobile device and released after a user authentication operation; and
authorizing, by the second server, the transaction based on a verification of the further verification value (SEAL_{ATC}').

2. The method of claim 1, wherein the transaction is a payment.

3. The method of claim 1 or 2, wherein the user authentication operation is a fingerprint verification.

4. The method of any of claims 1 to 3, wherein the transaction is a card payment and the sensitive identifier is a PAN (primary account number) associated with the card.

5. The method of any of claims 1 to 4, wherein the first key (KEY_{PIN}) and the second key (KEY_{PIN}') are derived using a same key derivation function, said same key derivation function being further based on a nonce value (Nonce_{PIN}) received by the mobile device from the first server.

6. The method of any of claims 1 to 5, wherein the encrypted verification value (eSEAL_{ATC}) is transmitted to the mobile device as part of a set of single use credentials further comprising: the ATC; and a nonce value (Nonce_{PIN}) for use in deriving the second key (KEY_{PIN}').

7. A transaction authorization system comprising:
a first server adapted to:
derive a first key (KEY_{PIN}) based on a mobile PIN value associated with a mobile device (102);
generate a verification value (SEAL_{ATC}) by generating an authentication code (MAC_{ATC}) using a third key (SUK_{PIN}) and based on at least one of an ATC (Application Transaction Counter) value and a token representing an account number or identifier that is to be kept secret;
encrypt, based on the first key, the verification value (SEAL_{ATC}) to generate an encrypted verification value (eSEAL_{ATC}); and
transmit the encrypted verification value to the mobile device; and
a second server adapted to:
receive a further verification value (SEAL_{ATC}') generated by the decryption of the encrypted verification value using a second key (KEY_{PIN}') derived based on a candidate PIN value entered into the mobile device or based on a PIN stored by the mobile device and released after a user authentication operation; and
authorize the transaction based on a verification of the further verification value (SEAL_{ATC}').

8. The transaction authorization system of claim 7, wherein the transaction is a payment.
